# EUROPEAN PATENT APPLICATION

(11) **EP 2 159 126 A1**
(43) Date of publication of application: **03.03.2010**
(21) Application number: 08162250.8
(22) Date of filing: 12.08.2008
(51) Int. Cl.: B61K 5/04, B23B 5/32, F16B 7/02

(54) **A lathing device**

(71) Applicant: EuroMaint AB, 171 29 Solna (SE)
(72) Inventor: Björklund, Arne, 522 94 Tidaholm (SE)
(74) Representative: Reyier, Ann-Mari

(57) **Abstract**

A lathing device adapted for turning a railroad wheel (3) of a rail-bound vehicle, the lathing device (1) comprising a lathing arrangement (5) adapted to hold a lathing tool (7) against the circumference of the wheel during a turning operation, and a supporting frame (9) adapted to support the lathing arrangement (5), wherein the lathing device is constructed from separate components adapted to be connected with each other, such that the components are mountable and dismountable to each other.

## Description

### TECHNICAL FIELD

The present invention relates to a lathing device adapted for turning a railroad wheel of a rail-bound vehicle, the lathing device comprising a lathing arrangement adapted to hold a lathing tool against the circumference of the wheel during the turning operation, and a supporting frame adapted to support the lathing arrangement. The lathing device is constructed from separate components adapted to be connected with each other, such that the components are mountable and dismountable to each other.

### PRIOR ART

The wheels of rail-bound vehicles are provided with special wheel profiles along their circumferences, in order to fit the rail. The circumference of the wheel comprises a treading bearing on the rail and a flange projecting inside the rail in order to hold the rail-bound vehicle onto the rail. The wheels of the rail-bound vehicle are usually arranged in pairs, and the two wheels in one wheel-pair are rigidly connected with each other by a wheel-shaft. The two wheels of a wheel-pair thus usually rotate with the same rotation velocity.

Damages on a wheel may cause damages on the rail or may cause the rail-bound vehicle to go off the rail. The vehicle must therefore be taken to a repair shop in which the vehicle is lifted, after which the wheel-pair with the damaged wheel is replaced. The removed wheels may then be turned in a lathe so that the wheel profile once again becomes correct.

Document US 4,276,793 shows a lathing device arranged to turn a wheel without prior removal of the wheel. The vehicle is lifted slightly so that the wheel can rotate and the lathing equipment is positioned beneath the vehicle in a pit under the rail. Due to the weight of the vehicle, having an axle pressure of about 25 ton, the device is very large and heavy and can only be provided in a repair shop. This is a problem since wheel-bound vehicles are often damaged when the vehicle is far from a repair shop, wherein the vehicle can be left immobile. Mobile lifting cranes has therefore been conceived for lifting the vehicle and changing a wheel-pair out on the field. However, modern cargo wagons are not built to be lifted while loaded, wherein for example a cargo wagon first needs to be emptied before the wagon can be lifted by the crane. Thus the time for a stand still becomes very long.

Trials have been made to manufacture lathing devices adapted for turning railroad wheels in the field while the wheel remains on the vehicle. One problem with these devices is that the lathing devices are not sufficiently stable to allow turning with desired tolerances. Due to the vibrations created during the turning it is very complicated to turn the wheel with a satisfying quality. Another problem with these devices is that it is difficult to mount and dismount the device easily when in the field.

### SUMMARY OF THE INVENTION

One object of the present invention is to indicate a lathing device adapted for turning the railroad wheel of a rail-bound vehicle, which is easy to mount and dismount and which has sufficient stability for high quality turning of a wheel.

This object is achieved with the lathing device according to the preamble of claim 1, which is **characterized in that** at least one component of the supporting frame comprises a connection element adapted to form a joint with a second connection element on a second component, wherein one of the connection elements comprises a protruding member and the other connection element comprises a receiving member adapted to receive and hold the protruding member in a holding cavity for forming the joint, wherein the protruding member comprises at least one outer surface section adapted to bear against an inner surface of the receiving cavity. By connecting at least some of the components of the lathing device with such joints a greater stability is achieved such that the lathing device may more easily be used for turning the wheels of a railroad vehicle, while maintaining a low weight and small dimensions for the lathing device. By letting an outer surface section of a protruding member bear against an inner surface in a receiving cavity the protruding member will hinder rotations since the protruding member has the ability to resist torques. Furthermore by letting the outer surface section bear against the inner surface vibrations may be transferred through the supporting structure and further to the ground or the rail. Hence any vibrations induced will be transferred to the ground and absorbed, so that the turning of the wheel will not disturbed.

Preferably the protruding member is straight and easily slidable and insertable into the receiving cavity. Thus the joining of two components is easier and quicker to perform. In particular the lathing device may easily be mountable when in the field and the lathing device is easily transportable since the lathing device may be transported as separate components.

According to one embodiment of the invention the protruding member comprises at least one side surface adapted to engage a corresponding side surface of the receiving cavity. Preferably the protruding member also comprises an end surface adapted to engage a bottom surface arranged at the bottom of the receiving cavity. Thus the receiving cavity is adapted to receive and hold the protruding member from at least five mutually perpendicular and/or opposite directions. Hence the stability of the joint increases since the protruding member is supported both from the surrounding sidewalls of the receiving cavity as well as its bottom.

According to one embodiment of the invention the outer surface section of the protruding member is tapered for at least a part of the length of the protruding member. Preferably the outer surface section of the protruding member is tapered for at least the greater part of the length of the protruding member. Preferably the entire outer surface of the protruding member is tapered. Preferably the outer surface section is continuously tapered. Due to the taper a greater stability of the joint is achieved. Preferably the taper is less than 11° such that the protruding member becomes self-locked inside the receiving cavity. The taper also determines the insertion length of the protruding member inside the receiving cavity.

Preferably, the end surface of the protruding member bear against the bottom of the receiving cavity simultaneously with the outer surface of the protruding member making contact with the tapered inner surface of the receiving cavity. This gives an extra determination of the position of the protruding member inside the receiving cavity, which gives extra stability to the joint. The demands on the dimensional tolerances are thus very severe and the quality of the protruding member and of the receiving cavity must be very high.

According to a further embodiment of the invention the protruding member is shaped such that at least a portion of the outer surface section is angled such that the outer surface section block against rotation of the protruding member around its length axis inside the cavity. By blocking against rotation it is ensured that the joint is fixed from rotations around the joint, which increases the stability of the lathing device. In order to block against movement the protruding member is shaped with at least one surface section angled such that its normal have at least one component in a direction opposite the movement. Thus the protruding member is preferably shaped with a non-circular cross-section.

Preferably the outer surface of the protruding member is shaped with a side wall portion having larger radius of curvature and at least one corner portion having a smaller radius of curvature. Preferably the outer surface of the protruding member is smooth. In particular the corners are preferably smooth rather than sharp. A smooth surface reduces wear and the risk of cracking due to concentration of force.

According to a further embodiment of the invention the protruding member is shaped with a cross-section, which is polygonal. A polygonal shape always has at least one surface section angled such that there is a normal component in all directions. Thus a polygonal shape ensures that the joint locks against rotations and movement. Preferably the protruding member is shaped as a truncated cone with a non-circular cross-section. A polygonal and tapered shape for the protruding member and the receiving member ensure a very high stability, so that the lathing device is stable and absorbs the vibrations created during the turning operation.

According to a further embodiment the receiving member comprises an extended element positioned inside the receiving cavity. Preferably the extended element is positioned to extend from the bottom of the receiving cavity and upwards. In turn the protruding member comprises an inner cavity adapted to receive the extended element. Preferably the protruding member has an opening to the inner cavity in the end surface of the protruding member. Thus when the protruding member is inserted inside the receiving cavity the extended element is likewise inserted into the inner cavity. The extending element thus guides the insertion of the protruding member inside the receiving cavity, which simplifies the insertion process. Furthermore the extended element increases the stability and the strength of the joint.

According to a further embodiment the receiving member comprises a fastening member adapted to hold fast the protruding member inside the receiving cavity in a first state, and to allow separation of the protruding member and the receiving member in a second state. Thus it is ensured that the protruding member remains inside the receiving cavity when a joint is desired and the fastening member is in the first state, and that the two components easily can be separated by pulling the protruding member out of the receiving cavity, when the fastening member is in the second state. Preferably the fastening member is movable between the first and the second state by simple manipulation by an operator.

Preferably the fastening member comprises a manipulation element adapted to move the fastening member between the first and the second state. Preferably the manipulation element comprises an asymmetrically shaped shaft adapted to rotate around a rotation axis and affect the fastening member with its asymmetric surface. Preferably the fastening member is movable between the first and the second state by rotating the manipulation element no more than two turns, preferably only half a turn, by the operator.

Preferably the fastening member is integrated with the extended element, wherein the fastening member engages an inner surface of the inner cavity of the protruding member. Preferably the fastening member comprises an engagement element adapted to engage a notch arranged on the inner surface of the inner cavity. Preferably the fastening member is furthermore adapted to pull the protruding member down into the receiving cavity.

According to a further embodiment the supporting frame comprises at least one cross-beam adapted to be arranged across both rails of the rail and to bear against the rail. Preferably the cross-beam is arranged close to the wheels of the wheel-pair. Preferably the cross-beam is clamped onto both rails by use of two clamping devices. This gives a very stable supporting structure. Preferably the supporting frame comprises two cross-beams arranged on either side of the wheel. Preferably the supporting frame further comprises two strut members arranged to connect the cross-beams with each other in order to form a square frame resting on the rail. Preferably the cross-beams are pipe-shaped. A pipe-shape gives a strong structure in relation to its weight.

According to one embodiment the supporting frame further comprises a mounting frame adapted for mounting the lathing arrangement, which mounting frame is connected with the cross-beam in at least one joint. Preferably the mounting frame is adapted to be connected with the cross-beam in two joints which are spaced apart. Preferably the mounting frame is further arranged to be clamped against the rail in at least one point. Thus the mounting frame is fixed to the rail and to the cross-beam in totally at least three fixed points, which gives very good stability and strength, as well as good resistance against vibrations.

According to one embodiment the mounting frame is adapted to form a closed loop with the cross-beam. A closed loop gives a very strong structure for holding the lathing arrangement. Preferably the lathing arrangement is positioned inside the closed loop. Preferably the mounting frame is U-shaped. Preferably the two upper ends of the U-shaped mounting frame are connected with the cross-beam, and the bottom part of the U is clamped against the rail.

According to one embodiment the mounting frame and/or the cross-beam are adapted to allow connection of the mounting frame at different lateral positions along the cross-beam. Due to differences in track-width it is necessary to adjust the position of the mounting frame on the cross-beam. Preferably the mounting frame is slidable between different positions on the cross-beam. Preferably the mounting frame comprises a clamping arrangement adapted for clamping the mounting frame against the rail in different lateral positions. Preferably the clamping arrangement comprises at least one engagement arm adapted to engage with the underside of the rail. Preferably the clamping arrangement also comprises a resting member comprising a resting surface adapted to rest against the rail. The resting surface is smooth and slightly curved corresponding to the rail surface.

Preferably the resting member is further adapted to allow clamping of the mounting frame to the rail in different lateral positions relative to the rail. The resting member thus comprises a supporting surface adapted for supporting the mounting frame, which is provided with notches, spaced apart in the lateral direction. The clamping arrangement further comprises a clamping surface provided with corresponding projections adapted to fit into the notches. By letting the support surface and the clamping surface engage each other at different lateral positions, the mounting frame is similarly positioned at different lateral positions, while the notches and projections ensure a stable and non-moving clamping against the rail.

According to one embodiment the mounting frame is arranged to hold the lathing arrangement at a desired angle relative to the wheel. Preferably the lathing arrangement is arranged at an angle relative to the horizontal and also directed towards the wheel. When turning the wheel it is necessary that the lathing tool is directed towards the centre of the wheel. Normally lathing devices change the direction of the lathing tool in order to achieve the correct angle. However, due to the extreme conditions, greater stability is achieved by angling the entire lathing arrangement rather than only the tool.

According to one embodiment of the invention the supporting structure comprises a movable frame movably mounted on the mounting frame and adapted to hold the lathing arrangement. Preferably the movable frame is movable in a direction towards and away from the wheel center. Thus the pressing of the lathing tool against the rim of the wheel can be controlled by moving the movable frame. Preferably the movable frame is also adapted to hold the lathing arrangement such that the lathing arrangement is movable in a lateral direction inside the movable frame. Thus the turning operation can be controlled by moving the lathing arrangement inside the movable frame in the lateral direction, in order to turn the entire surface of the circumference of the wheel.

The lathing arrangement is further adapted to control the movement of the lathing tool during the turning of the wheel. According to one embodiment the mounting frame is arranged to allow sliding of the lathing arrangement in the mounting frame both in a lateral direction and towards and away from the wheel.

According to one embodiment the lathing device is adapted to be operated outdoors in the field and to turn the wheel of the vehicle while the wheel remains on the vehicle.

### BRIEF DESCRIPTION OF THE DRAWINGS

The invention is now to be described as a non limiting example of the invention with reference to the attached drawings.
- Figs. 1a-b: show a lathing device according to one example of the invention.
- Figs. 2a-c: show a joint according to one example of the invention
- Fig. 3: shows a clamping arrangement according to one example of the invention.

### DETAILED DESCRIPTION

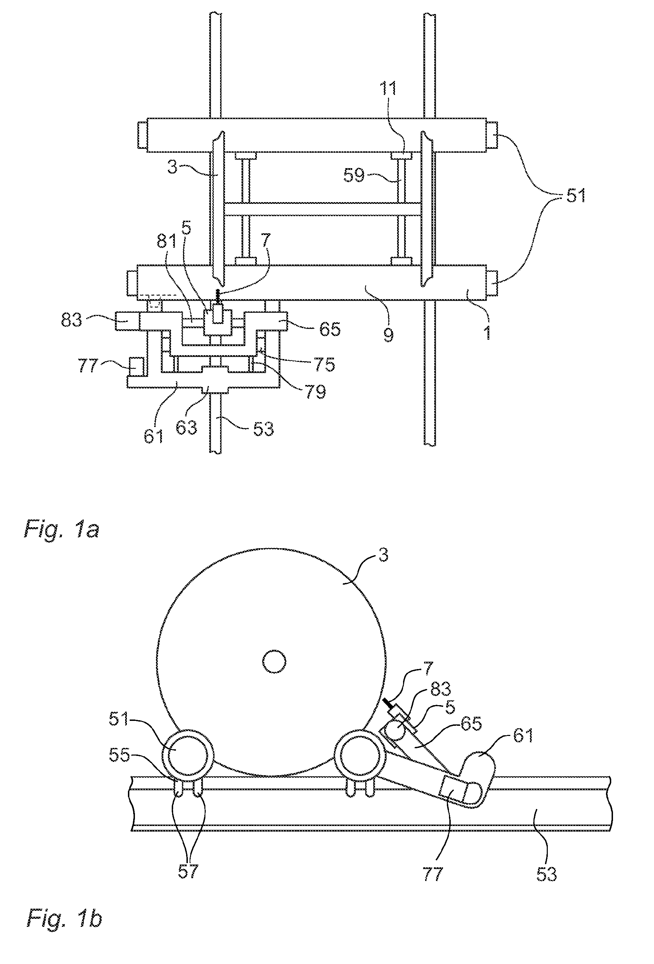

Figs 1a-b show a schematic representation of a lathing device 1 adapted for turning a railroad wheel 3 of a rail-bound vehicle according to one example of the invention. The lathing device 1 comprises a lathing arrangement 5 adapted to hold a lathing tool 7 against the circumference of the wheel during a turning operation. The lathing device 1 further comprises a supporting frame 9 adapted to support the lathing arrangement 5. The supporting frame 9 is adapted to be mounted directly onto the rail, and thus it is not necessary to arrange a lathing pit beneath the rail for turning the wheel.

The lathing device 1 is constructed from separate components adapted to be connected with each other, such that the components are mountable and dismountable to each other. Thus the lathing device may be mounted and dismounted in a desired location, so that the lathing device 1 may be used outside in the field, far from any repair shops. Furthermore it is easy to transport the lathing device when the lathing device is dismantled into its components.

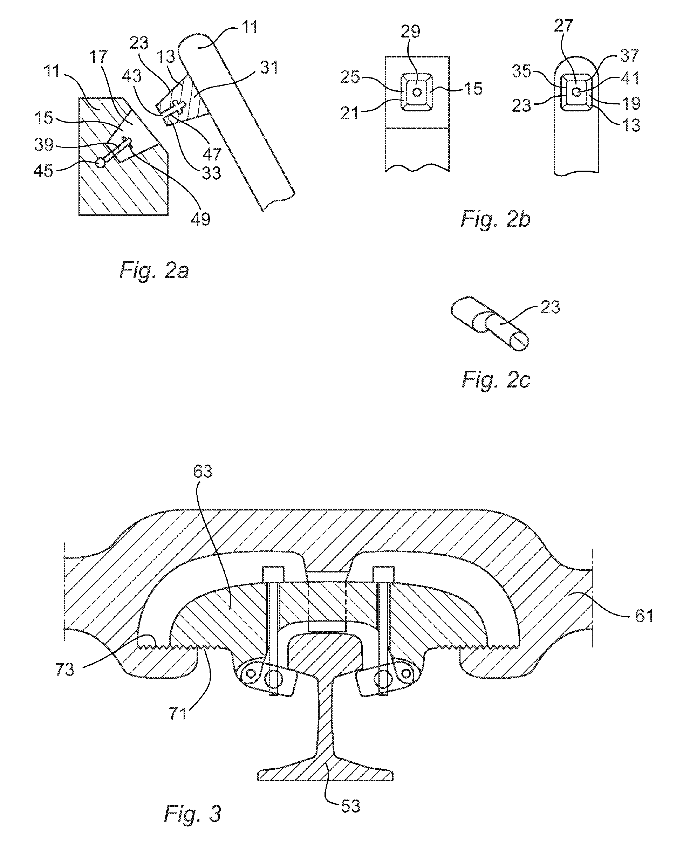

To this end at least one component of the supporting frame 9 comprises a connection element 11 adapted to form a joint with a second connection element on a second component. The joint and the design of the connection elements 11 is shown in fig. 2a-c. In order to ensure that the lathing device is sufficiently stable and resistant against vibrations induced during the turning operation, one of the connection elements 11 comprises a protruding member 13 and the other connection element comprises a receiving member 15 adapted to receive and hold the protruding member 13 in a receiving cavity 17 for forming the joint. The protruding member 13 further comprises at least one outer surface section 19 adapted to bear against an inner surface 21 in the receiving cavity 17. This will hinder rotation of the joint since the protruding member 13 has the ability to resist torques. Furthermore vibrations may be transferred through the joint by the contacting surfaces.

In this example the protruding member 13 is straight and easily slidable and insertable into the receiving cavity 15. The protruding member 13 is arranged to extend outwardly from the surface of its component, in this example perpendicular from the surface of the component. Correspondingly the receiving member 15 is arranged to extend inwardly inside the body of its component. This ensures that the receiving member 15 is protected within the component.

The outer surface 19 of the protruding member 13 comprises at least one side surface section 23 adapted to engage a corresponding side surface section 25 of the receiving cavity 15. The protruding member 13 also comprises an end surface 27 adapted to engage a bottom surface 29 arranged at the bottom of the receiving cavity 17. Thus the receiving cavity 17 is adapted to receive and hold the protruding member 13 from at least five mutually perpendicular and/or opposite directions.

The protruding member comprises a base portion 31 adapted to connect the protruding member to its component, and an outermost portion 33, which is the most extended portion of the protruding member 13. In this example the outer surface 19 of the protruding member 13 is tapered in a direction from the base portion 31 to the outermost portion 33 for at least a part of the length of the protruding member 13, in this example at least the greater part of the length of the protruding member 13. In this example the entire outer surface 19 of the protruding member 13 is tapered. Thus the outermost portion 33 of the protruding member 13 has a width, which is smaller than the width of the base portion 31. Preferably the outer surface 19 is continuously tapered. The tapering angle is smaller than 11°, such that the protruding member 13 becomes self-locked inside the receiving cavity 15. The inner surface 21 of the receiving cavity is tapered correspondingly to receive and bear against the outer surface 19 of the protruding member.

When the protruding member 13 is inserted into the receiving cavity 15 the outermost portion 33 of the protruding member forms the lead. Thus the tapered outer surfaces 23, 25 determines the insertion length of the protruding member inside the receiving cavity 17. However, the end surface 27 of the protruding member 13 is also to bear against the bottom surface 29 of the receiving cavity simultaneously with the outer side surface 23 of the protruding member making contact with the tapered inner side surface 25 of the receiving cavity. This gives an over determination of the position of the protruding member 13 inside the receiving cavity, which gives extra stability to the joint. The demands on the dimensional tolerances are thus very severe and the quality of the protruding member and of the receiving cavity must be very high.

The protruding member 13 is further shaped such that at least a portion of the outer surface section 19 is angled such that the outer surface section 19 block against rotation of the protruding member around its length axis inside the cavity. By blocking against rotation it is ensured that the joint is fixed from rotations around the joint, which increases the stability of the lathing device. In this example the outer side surface section 23 of the protruding member 13 is shaped with at least one side wall portion 35 having a large radius of curvature, and a corner portion 37 having a smaller radius of curvature. The side wall surface 35 is thus slightly round or curved, and the corner portion 37 is also round or curved, but has a smaller radius of curvature than the side wall section 35. Hence there will always be at least one surface section of the protruding member 13 angled such that its normal have at least one component in a direction opposite the movement, in order to block against the movement.

The outer surface 23 of the protruding member 13 is also smooth, such that there are no sharp corners or angles, which gives a better durability. In this example the outer surface 23 of the protruding member 13 comprises four side wall surfaces 35 and four corner portions 37. Thus the protruding member 13 is shaped with a cross-section, which is polygonal, in this example slightly square, but rounded off for smoothness. The protruding member 13 is furthermore shaped with the same cross-section shape for at least the majority of the length of the protruding member. In this example the protruding member 13 is thus shaped as a truncated cone with a non-circular cross-section. The combination of a polygonal and tapered shape for the protruding member 13 and the receiving member 15 ensure a very high stability, so that the lathing device is stable and absorbs the vibrations created during the turning operation.

The receiving member 15 comprises a fastening member 39 adapted to hold fast the protruding member 13 inside the receiving cavity 17 in a first state, and to allow separation of the protruding member 13 and the receiving member 15 in a second state. In this example the fastening member 39 comprises an extended element 39 positioned inside the receiving cavity 17. In this example the fastening member 39 is attached at the bottom surface 29 of the receiving cavity and extends upwards. The protruding member 13 comprises a corresponding inner cavity 41 adapted to receive the fastening member 39. The protruding member 13 thus has an opening 43 to the inner cavity in the end surface 27 of the protruding member to allow passage of the fastening member 39, so that, when the protruding member 13 is inserted inside the receiving cavity the extended element is likewise inserted into the inner cavity.

The fastening member 39 further comprises a manipulation element 45, which is shown in closer detail in fig. 2c, which is adapted to move the fastening member 39 between the first and the second state. In this example the manipulation element 45 comprises an asymmetrically shaped shaft adapted to rotate around a rotation axis when operated, and thus to affect the state of the fastening member 39 with its asymmetric surface. The fastening member 39 is arranged movable between the first and the second state by being pushed by the surface of the rotating manipulation element 45. Thus an operator may loosen or fasten the protruding member 13 in the receiving cavity 17 by simply rotating the manipulation element 45. The fastening member 39 is adapted to engage an inner surface 47 of the inner cavity 41 of the protruding member 13. The fastening member 39 also comprises an engagement element 49 adapted to engage a notch arranged on the inner surface 47 of the inner cavity for locking the protruding member 13 inside the receiving cavity 17. The fastening member 39 is further adapted to pull the protruding member 13 down into the receiving cavity 17.

The over determination of the shapes of the protruding member 13 and the receiving cavity 17 demands very low tolerances and high quality manufacturing. In this example the protruding member 13 and the receiving member 15 are manufactured such that the tolerances are less than 0.1 mm, preferably less than 0.05 mm. The length of the protruding member 13 and the receiving cavity 17, respectively, is in this example between 1 - 10 cm, preferably between 3 - 7 cm and more preferably between 4 - 6 cm. Similarly, the width of the protruding member 13 and of the receiving cavity 17 is in this example between 1 - 7 cm, preferably between 2 - 6 cm and more preferably between 3 - 5 cm. The outer surface 19 of the protruding member 13, the inner surface 21 of the receiving cavity 17, and the inner surface 47 of the inner cavity 41, are in this example also coated with a durable material. Due to the shape of the protruding member and the receiving cavity it is not necessary that fictional forces hold the joint together, since there will always be at least one surface oriented with a normal such that at least one component is directed against movement in all possible directions (the fastening member 39 has a normal against disconnection of the connection elements 11 in its first state). This also ensures less wear and a long lifetime for the joint.

Returning to figs. 1a-b the supporting frame 9 comprises at least one cross-beam 51, in this example two cross-beams 51, adapted to be arranged across both rails 53. In this example the cross-beams 51 are pipe-shaped and thus have a circular cross-section. In order to stand stable on the rail the cross-beams 51 comprises feet 55 adapted to stand on the rails 53, and clamping devices 57 adapted to securely clamp the cross-beams onto the rails. In this example the cross-beams 51 are arranged lying right next to and on either side of the wheels of the wheel-pair. The supporting frame 9 further comprises two strut members 59 arranged to connect the cross-beams with each other. The cross-beams 51 and the strut members 59 are in this example joined by connection elements as described in relation to fig. 2. The cross-beams 51 and the strut members 59 thus form a square frame clamped on the rail. The strut members 59 are further arranged to be adjustable in length and are adapted to clamp the cross-beams together.

The supporting frame 9 further comprises a mounting frame 61 adapted for mounting the lathing arrangement 5. The mounting frame 61 is U-shaped and is connected with the front cross-beam 51 with its two upper ends of the U-shaped mounting frame, forming two joints as were described in relation to fig. 2a-c. The two joints are spaced apart, which ensures a more stable supporting frame 9. The mounting frame 61 further comprises a clamping arrangement 63 arranged to clamp the mounting frame 61 against the rail. Thus the mounting frame 61 is clamped against the rail and to the cross-beam in totally at least three fixed points. The mounting frame 61 thus forms a closed loop with the cross-beam, which gives very good stability and strength, as well as good resistance against vibrations.

In this example the mounting frame 61 and the front cross-beam 51 are adapted to allow connection of the mounting frame 61 at different lateral positions along the cross-beam. In this example the front cross-beam comprises a slidable connection element 11 adapted to slide along the length of the cross-beam. The slidable connection element further comprises a locking member adapted to lock the connection element in place.

The clamping arrangement 63 is similarly adapted for clamping the mounting frame 61 against the rail in different lateral positions. In fig. 3 the construction of the clamping arrangement 63 is shown in closer detail. Depending on the distance between the two rails, which may vary with tolerances of about 20-30 mm, the mounting frame 61 will rest at different positions onto the rail with a resting surface 70. The clamping arrangement 63 comprises at least one, in this example two engagement arms 67 adapted to engage with the underside of the rail in order to clamp the clamping arrangement and the mounting frame onto the rail. The clamping arrangement 67 further comprises an adapter member 69, which is arranged movable relative to the mounting frame for a limited distance in a lateral direction. The adapter member 69 is further arranged to guide the engagement arms 67 to desired positions under the rail, regardless of the position of the mounting frame relative to the rail. Thus the engagement arms 67 will clamp the clamping arrangement 63 and the mounting frame 61 steadily onto the rail, even if the mounting frame is laterally displaced from the centre of the rail.

The adapter member further comprises an adapter surface 71 directed downwards, and which is provided with spaced apart notches arrayed in a lateral direction. The mounting frame 61 similarly comprises a clamping surface 73 directed upwards, and which is provided with corresponding projections adapted to fit into the notches of the adapter surface 71. The engagement arms 67 forces the adapter member 69 downwards, wherein the adapter surface 71 will press down onto the clamping surface 73, such that the mounting frame 61 is pressed towards and onto the rail with its resting surface 70. The notched supporting surface 71 and the clamping surface 73 provided with projections, ensure that the mounting frame and the engagement arms remain fixed at the same position relative each other even when the clamping arrangement 63 is subjected to large vibrations from the turning of the wheel. This is due to that the notches and projections hinders the mounting frame 61 and the adapter member 69 from lateral movement relative each other once the clamping arrangement 63 is clamped onto the rail.

The supporting frame 9 further comprises a movable frame 65, positioned inside the mounting frame 61, and adapted to hold the lathing arrangement 5. The movable frame 65 is movably mounted in a railing 75, and is movable in a direction towards the centre of the wheel to be turned. The mounting frame 61 comprises a motor drive 77 arranged to drive elongation members 79 arranged to drive the movement of the movable frame 65. During the turning operation the movable frame 65 will be moved towards the wheel until the lathing tool contacts the wheel rim. After the first layer of metal has been cut from the wheel the movable frame 65 will continue to be moved towards the wheel until the truing of the wheel is finished.

The mounting frame further 65 comprises a guiding rod 81 arranged between the two branches of the U. The guiding rod 81 is arranged for mounting the lathing arrangement 5 on the rod. The rod 81, and thus the lathing arrangement 5, is slidable in the lateral direction by aid of a second motor drive 83 attached on the movable frame. During the turning operation the lathing arrangement will be moved laterally along the rim of the wheel, so that the entire width of the wheel becomes turned. The mounting frame 65 is further arranged to hold the lathing arrangement 5 at a desired angle relative to the wheel, so that the lathing tool is held at a desired angle suitable for turning of the wheel. The lathing arrangement 5 is thus arranged at an angle relative to the horizontal and also directed towards the wheel.

The invention is not limited to the example described but may be varied freely within the framework of the attached claims.

## Claims

1. A lathing device adapted for turning a railroad wheel (3) of a rail-bound vehicle, the lathing device (1) comprising a lathing arrangement (5) adapted to hold a lathing tool (7) against the circumference of the wheel during a turning operation, and a supporting frame (9) adapted to support the lathing arrangement (5), wherein the lathing device is constructed from separate components adapted to be connected with each other, such that the components are mountable and dismountable to each other, **characterized in that** at least one component of the supporting frame comprises a connection element (11) adapted to form a joint with a second connection element on a second component, wherein one of the connection elements comprises a protruding member (13) and the other connection element comprises a receiving member (15) adapted to receive and hold the protruding member in a receiving cavity (17) for forming the joint, wherein the protruding member comprises at least one outer surface section (19) adapted to bear against an inner surface (21) of the receiving cavity.

2. A lathing device according to claim 1, **characterized in that** the protruding member (13) comprises at least one side surface arranged to bear against a side surface in the receiving cavity, and one end surface (27) arranged to bear against a bottom surface in the receiving cavity.

3. A lathing device according to claim 1 or 2, **characterized in that** the outer surface (23) is tapered for at least a part of the length of the protruding member.

4. A lathing device according to claim 1, 2 or 3, **characterized in that** the protruding member is shaped such that at least a portion of the outer surface section (23) is angled such that the outer surface section block against rotation of the protruding member around its length axis inside the receiving cavity.

5. A lathing device according to claim 4, **characterized in that** the protruding member (13) is shaped with a polygonal shape.

6. A lathing device according to any of the claims 1-5, **characterized in that** the receiving member (15) comprises an extended element (39) positioned inside the receiving cavity, and the protruding member comprises an inner cavity (41) having an opening (43) in an end surface of the protruding member, which inner cavity is adapted to receive the extended element.

7. A lathing device according to any of the claims 1-6, **characterized in that** the receiving member comprises a fastening member (39) adapted to hold fast the protruding member inside the receiving cavity (17) in a first state, and allow separation of the protruding member and the receiving member in a second state.

8. A lathing device according to any of the claims 1-7, **characterized in that** the supporting frame (9) comprises at least one cross-beam (51) to be arranged across both rails of the rail and to bear against the rail, and a mounting frame (61) adapted for mounting the lathing arrangement, wherein the mounting frame is connected with the cross-beam in at least one joint.

9. A lathing device according to claim 8, **characterized in that** the mounting frame (51) and/or the cross-beam are adapted to allow connection of the mounting frame at different lateral positions along the cross-beam.

10. A lathing device according to claim 9, **characterized in that** the mounting frame (61) comprises a clamping arrangement (63) adapted to clamp the mounting frame to the rail, wherein the clamping arrangement comprises a resting member (69) adapted to rest against the rail, and to allow clamping of the mounting frame to the rail in different lateral positions relative to the rail.

11. A lathing device according to any of the claims 8-10, **characterized in that** the mounting frame (61) is U-shaped.

12. A lathing device according to any of the claims 8-11, **characterized in that** the supporting structure comprises a movable frame (65) movably mounted on the mounting frame and adapted to hold the lathing arrangement (5).

13. A lathing device according to claim 12, **characterized in that** the movable frame (65) is adapted to hold the lathing arrangement (5) such that the lathing arrangement is movable in a lateral direction.

14. A lathing device according to any of the claims 1-13, **characterized in that** the lathing device (1) is adapted to be operated outdoors in the field and to turn the wheel of a vehicle while the wheel remain on the vehicle.
